# EUROPEAN PATENT APPLICATION

(11) **EP 3 623 834 A1**
(43) Date of publication of application: **18.03.2020**
(21) Application number: 18465571.0
(22) Date of filing: 11.09.2018
(51) Int. Cl.: G01S 5/00, G01C 21/30

(54) **METHOD FOR PRECISE LOCALIZATION**

(71) Applicant: Continental Automotive GmbH, 30165 Hannover (DE)
(72) Inventor: SON, Andrei, 300702 Timisoara (RO)

(57) **Abstract**

A localization system (200) for a vehicle (100) is provided, comprising: a positioning system (207) configured to determine the position of the vehicle; a communication device (205) configured to communicate with another vehicle (101, 102), and to receive traffic participant positioning and motion data from the other vehicle (101, 102); a traffic participant positioning and motion data sensor network configured to sensor traffic participant positioning and motion data of the other vehicle (101, 102); and a control unit (201) configured to correct the position of the vehicle (100) based on the traffic participant positioning and motion data from the sensor network (202) and the traffic participant positioning and motion data received from the other vehicle (101, 102).

## Description

A method for precise localization using traffic participants is provided.

Conventionally, precise localization mechanisms imply global satellite navigation systems (GNSS) as, e.g., GPS, Galileo or GLONASS, and Dead Reckoning technologies. However, the availability and accuracy of a GNSS position depends on the visibility of satellites, their visibility geometry and on other factors, mainly wave propagation, so that for vehicles sensors of the car support the positioning. E.g., starting from a reliable position, the position can be propagated using the measured speed, acceleration etc. This is especially helpful when the vehicle passes through a tunnel. Furthermore, so-called map matching technologies use stored maps to adjust the position of the vehicle to the road. As the position may still vary up to several meters, so that it is, e.g., not possible to identify the lane a vehicle is driving on, environmental models around the vehicle, generated in real-time by Advanced Driver Assistance Systems (ADAS), are used in correlation with a high definition map to provide a better positioning of a vehicle on that map. Current precise localization mechanisms are relying furthermore on local uniquely identified landmarks that are stored in the map and detected by ADAS sensor systems that bring a very fine correction of the ego-vehicle position, given initially by GPS and vehicle dynamics used in Dead Reckoning.

However, e.g., uniquely identifiable landmarks are not always available. Thus, a localization system is desired that improves the precision of localization without relying on local uniquely identified landmarks.

The task is solved by a localization system and a method described in embodiments of the invention.

According to an aspect of the invention, a localization system for a vehicle is provided comprising
- a positioning system configured to determine the position of the vehicle;
- a communication device configured to communicate with another vehicle and to receive traffic participant positioning and motion data from the other vehicle;
- a traffic participant positioning and motion data sensor network configured to sensor traffic participant positioning and motion data of the other vehicle;
- a control unit configured to correct the position of the vehicle based on the traffic participant positioning and motion data from the sensor network and the traffic participant positioning and motion data received from the other vehicle.

That is, on one hand, the positioning and motion data of other vehicles are measured by the ego-vehicle and, on the other hand, the other vehicle itself provides the same parameters. Based on these two data sets a correction of the position can be determined.

These two sets are compared with each other leading to a difference of the position of the other vehicle, seen from the vehicle itself and from the other vehicle. This difference is used as a correction to the position determined by the positioning system.

Assuming 5G+ local high-speed communication will be available in the future on the highways, the vehicles can broadcast their own traffic participant positioning and motion data (TPPMD) and the TPPMD of all the detected traffic participants around them.

The broadcasted TPPMDs can further be used by each vehicle that receives these data to correct their precise localization by mapping the received TPPMDs with the detected traffic participants at the specified timestamp.

According to an embodiment of the invention, the traffic participant positioning and motion data of the localization system comprises:
- Center of the car position;
- Car dimensions;
- Angle of movement;
- Speed;
- Acceleration; and
- Timestamp

With this set of data, the position of the other car can be related, e.g., to the center of the car and to propagate the position to a single reference epoch for the received and sensed measurements.

According to an embodiment of the invention, the vehicle of the localization system comprises a sensor system configured to acquire traffic participant positioning and motion data of the vehicle; wherein the communication device is configured to broadcast the traffic participant positioning and motion data of the vehicle.

In this way, the ego-vehicle provides its own TPPMD data to other vehicles.

According to a further embodiment of the invention, the correction of the position of the vehicle comprises comparing traffic participant positioning and motion data of a plurality of other vehicles with traffic participant positioning and motion data of the vehicle.

In other words, the two TPPMD sets for each of the other vehicles are compared with each other, resulting in a difference between the measured position and the received position for each of the other vehicles. These differences for each of the vehicles can be combined in a certain way and the resulting combined difference can be used as a correction to the position that was determined by the positioning system of the vehicle.
According to an aspect, a vehicle is provided comprising a localization system as described above.

According to a further aspect, a method of localizing a vehicle is provided, comprising the steps of:
- Determining the position of the vehicle;
- Sensing traffic participant positioning and motion data of another vehicle;
- Receiving traffic participant positioning and motion data from the other vehicle;
- Correcting the position of the vehicle based on the sensed traffic participant positioning and motion data and the traffic participant positioning and motion data received from the other vehicle.

The method corresponds to the localization system described above.

According to a further aspect, a program element is provided, which, when being executed by a control unit of a vehicle, instructs the vehicle to perform the steps of the method described above.

According to a further aspect, a computer readable medium is provided on which a program element as described above is stored.

The following figures show embodiments and examples serving to explain the invention in more detail.
- Fig. 1: shows a vehicle according to an embodiment.
- Fig. 2: shows a localization system according to an embodiment.
- Fig. 3: shows an example scenario according to an embodiment.
- Fig. 4: shows a functional block diagram according to an embodiment.
- Fig.5: shows a method according to an embodiment.

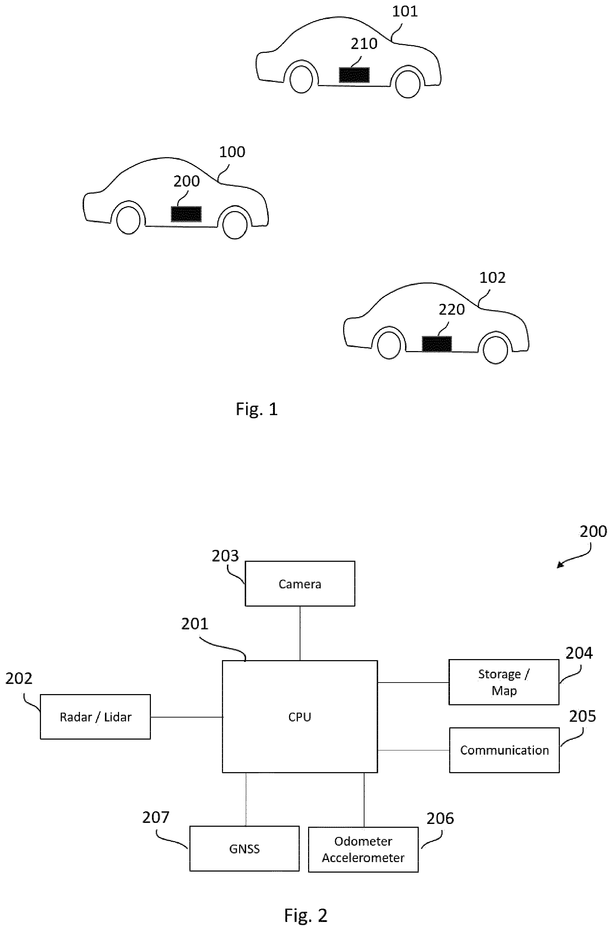

Fig. 1 shows a vehicle 100 that comprises a localization system 200. The vehicle 100 is surrounded by other vehicles 101, 102, each of which comprises sensor and communication systems 200, 210, 220 that are capable to individually measure their own position, their speed, acceleration and angle of movement and which broadcast this information together with a timestamp of the measurements and the stored dimensions of the vehicle 100, 101, 102. The communication units of the vehicles 100, 101, 102 that are part of the localization systems 200, 210, 220 broadcast this information, and the receivers of the localization system 200, 210, 220 of vehicle 100 receives the broadcast data. The following description illustrates the case, where vehicle 100 receives the data from the other vehicles 101, 102 and correspondingly, the localization system of vehicle 100 is described.

An example of the localization system 200 is shown in Fig. 2. The localization system comprises a communication unit 205 that receives the traffic participant positioning and motion data of one or more other vehicles 101, 102. Furthermore, it comprises sensors 206, 207 to detect its own position, as, e.g., a GNSS sensor 207. The position obtained by means of GNSS is a course position wherein the accuracy may be increased using the further sensors 206. Therefore, the system for localization may optionally comprise additionally, e.g. odometers, accelerometers and maps shown as block 206 in Fig. 2. These sensors 206 allow for supporting the position determination using methods as, e.g., Dead Reckoning, map matching, or other position propagation techniques known from the navigation area. Moreover, advanced driver assistant service sensors 202, and cameras 203 may support the position determination by sensing, e.g., the environment in combination with a high definition map 204. Nevertheless, the thus obtained position may still be course and may be further refined by additional information received by the communication unit 205. Optionally, the communication module comprises a broadcast module to send the traffic participant positioning and motion data of the vehicle 100 to other vehicles 101, 102.

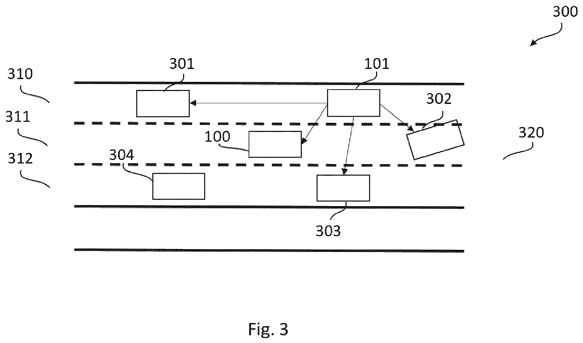

Fig. 3 shows an example scenario 300 in which the localization system 200 may be applied. A vehicle 100 that is also called ego-vehicle and which may be the same as vehicle 100 in Fig. 1 receives traffic participant positioning and motion data from vehicle 101 which may be the same vehicle as vehicle 101 in Fig. 1. Other vehicles 301, 302, and 303 receive also the traffic participant positioning and motion data of vehicle 101. The vehicles travel on lanes 310, 311, and 312 for one direction of a road 320. The angle of movement of the vehicles may differ. In this scenario, the vehicle 100 receives and uses only the data broadcast by vehicle 101. However, if further vehicles are available that transmit their traffic participant positioning and motion data, this information may also be used to get, e.g., a single combined position offset by determining the delta positions for each of these vehicles and combining the results, e.g., by determining a mean or a weighted mean or by using a specific algorithm.

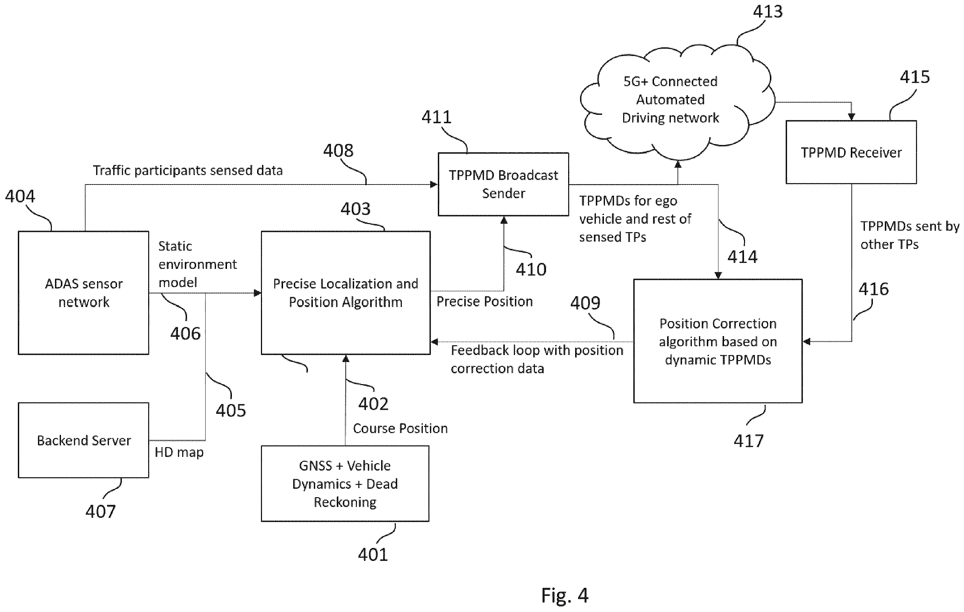

Fig. 4 shows an embodiment illustrated with a block diagram. Starting with block 401, a GNSS signal is sensed and a first course position is obtained by aiding the GNSS signal with other navigation information as, e.g. velocity and acceleration from sensors of the vehicle. The course position 402 is provided to the precise localization and position algorithm 403. An ADAS sensor network 404 inside or attached to the vehicle 100 delivers environmental information, as, e.g., landmarks or specific traffic signs, that may be used to find in combination with a high density map 405 a difference of an expected position of, e.g., the landmarks or signs by applying a static environment model 406. Furthermore, the ADAS sensor network detects at least parts of the traffic participant positioning and motion data set of other vehicles as, e.g., their position and velocity. Further data needed to complete such a data set as, e.g., the dimension of the other vehicle may be sensed or retrieved from a database when recognizing the type or model of the vehicle.

The high-density map 405 may be retrieved from a backend server 407 inside the vehicle 100 or through an over-the-air interface. The precise localization and position algorithm 403 uses the static environment model 406, the HD map 405, the course position 402, and correction data from a feedback loop 409 to calculate a precise position 410. The precise position 410 and the further traffic participant positioning and motion data 408 of the vehicle 100 itself and of other sensed vehicles 101, 102 including, e.g., car dimensions and timestamps are collected in the TPPMD broadcast sender 411 and broadcast over, e.g., the 5G+ Connected Automated Driving network 413 for other vehicles 101, 102.

TPPMDs from other vehicles 101, 102 are received in the TPPMD receiver 415 and provided 416 to the position correction algorithm based on dynamic TPPMDs. The position correction algorithm calculates the position correction, e.g., by comparing the TPPMD of the other vehicles 101, 102 with its own TPPMD and sends the position correction 409 to the precise localization and position algorithm which corrects the course position obtained from GNSS and Dead Reckoning and, if available, the static environment model.

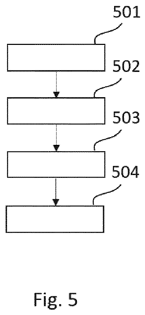

Fig. 5 shows a flow diagram of the method according to an embodiment. In 501 the non-precise position of the vehicle is determined. In 502 the traffic participant positioning and motion data of another vehicle is sensed. In 503 the traffic participant positioning and motion data from another vehicle is received; and in 504 the position of the vehicle is corrected based on the sensed traffic participant positioning and motion data and the traffic participant positioning and motion data received from the other vehicle.

## Claims

1. Localization system (200) for a vehicle (100) comprising:
- a positioning system (207) configured to determine the position of the vehicle;
- a communication device (205) configured to communicate with another vehicle (101, 102), and to receive traffic participant positioning and motion data from the other vehicle (101, 102);
- a traffic participant positioning and motion data sensor network configured to sense traffic participant positioning and motion data of the other vehicle (101, 102);
- a control unit (201) configured to correct the position of the vehicle (100) based on the traffic participant positioning and motion data from the sensor network (202) and the traffic participant positioning and motion data received from the other vehicle (101, 102).

2. Localization system (200) according to claim 1, wherein the traffic participant positioning and motion data comprises:
- center of the car position;
- car dimensions;
- angle of movement;
- speed;
- acceleration; and
- timestamp

3. Localization system (200) according to claim 1, wherein the vehicle (100) comprises a sensor system configured to acquire the traffic participant positioning and motion data of the vehicle (100); wherein the communication device is configured to broadcast the traffic participant positioning and motion data of the vehicle (100).

4. Localization System (200) according to claim 3, wherein the correction of the position of the vehicle (100) comprises comparing the received traffic participant positioning and motion data of a plurality of other vehicles (101, 102) with the traffic participant positioning and motion data from the sensor network (202) of the other vehicles (100).

5. Vehicle (100) comprising a localization system (200) according to one of claims 1-4.

6. Method of localizing a vehicle (100), comprising the steps of:
- determining (501) the position of the vehicle (100);
- sensing (502) traffic participant positioning and motion data (408) of another vehicle (101);
- receiving (503) traffic participant positioning and motion data (416) from another vehicle (101);
- correcting (504) the position of the vehicle (100) based on the sensed traffic participant positioning and motion data (408) and the traffic participant positioning and motion data (416) received from the other vehicle (101).

7. Program element, which when being executed by the control unit (201) of a vehicle (100), instructs the vehicle (100) to perform the steps of claim 6.

8. Computer readable medium on which a program element according to claim 7 is stored.
